# EUROPEAN PATENT SPECIFICATION

(11) **EP 2 951 913 B1**
(45) Date of publication and mention of the grant of the patent: **07.12.2016**
(21) Application number: 13702051.7
(22) Date of filing: 31.01.2013
(51) Int. Cl.: H02M 3/335, H02M 1/32, H02H 7/12, H02M 7/217

(54) **OVERVOLTAGE PROTECTION AND POWER SAVING CIRCUIT FOR A SWITCHED MODE POWER SUPPLY**
ÜBERSPANNUNGSSCHUTZ UND STROMSPARSCHALTUNG FÜR EIN SCHALTNETZTEIL
CIRCUIT DE PROTECTION CONTRE LES SURTENSIONS ET D'ÉCONOMIE D'ÉNERGIE POUR UNE ALIMENTATION À DÉCOUPAGE

(43) Date of publication of application: 09.12.2015
(73) Proprietor: Arçelik Anonim Sirketi, 34950 Istanbul (TR)
(72) Inventor: BACAKSIZ, Mucahit, 34950 Istanbul (TR); YUCE, Ahmet Ihsan, 34950 Istanbul (TR)
(86) International application number: PCT/EP2013/051920
(87) International publication number: WO 2014/117847

(56) References cited:
- US-A- 4 254 443
- US-A- 5 615 097
- US-A- 5 687 066
- "TL431, TL431A, Adjustable Precision Shunt Regulators", TEXAS INSTRUMENTS DATA SHEETS, XX, XX, 1 October 2000 (2000-10-01), pages 1-18, XP002453098,
- LITTELFUSE: "Transient Suppression Devices and Principles", APPLICATION NOTE AN9768, , vol. 1/1998, no. an9768 1 January 1998 (1998-01-01), pages 102-109, XP002497185, Retrieved from the Internet: URL:http://www.littelfuse.com/data/en/Appl ication_Notes/an9768.pdf [retrieved on 1998-01-01]

## Description

The present invention relates to electrical power supplies and, more particularly, to an overvoltage protection and power saving circuit in switched-mode power supplies (SMPS).
It is well-known that switched mode power supplies are prone to voltage fluctuations and as such they necessitate special circuit-level designs for overvoltage protection.

The present invention proposes a circuit design distinguishable in that it provides overvoltage protection circuit for the primary side of an SMPS circuit. The protection circuit compares input voltage and inactivates an SMPS controller in case an input voltage greater than a reference voltage is sensed. On the other hand in case an input voltage that is lower than said reference voltage is measured, said protection circuit remains inactive. In other words, during normal operation, said protection circuit may not conduct and inefficient dissipation of power therethrough may be avoided.

Among others, a prior art publication in the technical field of the invention may be referred to as EP 2 209 196, which discloses a protection circuit with a NOR logic circuit to which output voltages of a switched-mode power supply are connected and which orders a switch to interrupt the power flow in case of an error by controlling these output voltages.

The present invention provides an input stage overvoltage protection for a switched-mode power supply circuit, which is provided by the characterizing features as defined in Claim 1.

Primary object of the present invention is to provide a switched-mode power supply having an input stage overvoltage protection circuit by means of which inefficient power dissipation can be avoided.

The present invention proposes a switched-mode power supply (SMPS) in which an AC voltage source is connected with a primary side winding of a transformer. The primary side of said transformer comprises an input capacitor and a low voltage blocker in parallel therewith. The low voltage blocker ensures that if a bus voltage that is lower than a certain level is measured, a band gap reference comparator that is in series with said low voltage blocker is not energized. This ensures that no power dissipation is in question during normal operation within predefined voltage range.

On the other hand, in response to a bus potential greater than the upper limit of said predefined voltage range, said band gap reference comparator inactivates said switched-mode power supply controller and prevents any damage thereto due to overvoltage

Accompanying drawings are given solely for the purpose of exemplifying a switched-mode power supply input stage overvoltage protection circuit whose advantages over prior art were outlined above and will be explained in brief hereinafter.

The drawings are not meant to delimit the scope of protection as identified in the claims nor should it be referred to alone in an effort to interpret the scope identified in said claims without recourse to the technical disclosure in the description of the present invention.

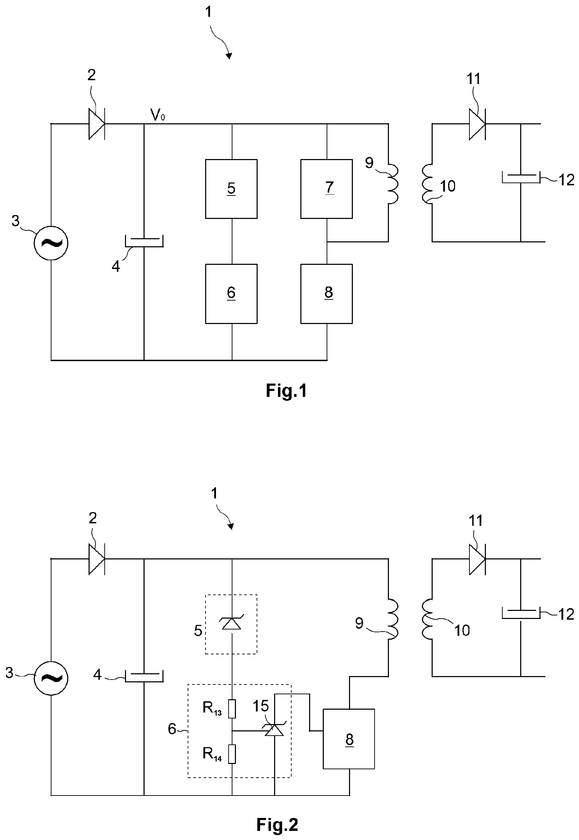

Fig. 1 demonstrates a simplified circuit diagram of an SMPS input stage overvoltage protection circuit according to the present invention.
Fig. 2 demonstrates a circuit diagram of an SMPS input stage overvoltage protection circuit according to the present invention.

The following numerals are used in the detailed description:
Switched-mode power supply (SMPS) (1)
Diode (2)
AC voltage source (3)
Input capacitor (4)
Low voltage blocker (5)
Bandgap reference/comparator (6)
Clamp circuit (7)
SMPS controller (8)
Primary winding (9)
Secondary winding (10)
Rectifier (11)
Capacitor (12)
Resistors (R₁₃, R₁₄)
TL431 regulator (15)

The present invention proposes a switched-mode power supply (SMPS) overvoltage protection circuit designated generally by the numeral 1.

An AC voltage source (3) is connected to a switched-mode power supply (1) by means of a transformer having primary and secondary windings (9 and 10). The AC power is rectified by a half-wave rectifier, i.e. a diode (2) and filtered into a DC voltage by an input capacitor (4).

The primary winding (9) is in principle connected in series with an SMPS controller (8) in the form of a switching device (not shown for the sake of clarity) switching on and off, during an on period, building up magnetizing flux in said primary winding (9), which in turn induces a current in said secondary winding (10) of said transformer. The semiconductor used in said SMPS controller (8) could be an IGBT or other type of high frequency solid state switch.

Further, as there is leakage inductance between the primary and secondary sides of the transformer, the leakage energy cannot be directly transferred to the secondary side and consequently must be absorbed during commutation. Accordingly, a clamp circuit (7) should be used to protect said switching device.

Although the enclosed figures demonstrate schematics of a flyback power converter, the working principle of the present invention is equally applicable to other SMPS converters as well.

The output from the transformer being isolated from the primary side voltage is rectified by a rectifier (11) and smoothed by a smoothing capacitor (12) to provide a DC output.

The input stage of the switched-mode power supply (1) converter according to the present invention comprises a band gap reference/comparator (6) in the form of a shunt regulator with voltage setting bias resistors (R₁₃ and R₁₄). The shunt regulator may be realized by a conventional regulating device such as, for example, a TL431 regulator (15). TL431 regulator (15) is manufactured by several manufacturers and is therefore available in the market.

In use, the resistances 13 and 14 (R₁₃ and R₁₄) are selected such that said shunt regulator will begin conducting only when a certain voltage level is reached; a centre point between said resistors R₁₃ and R₁₄ is connected to a reference pin of said shunt regulator. Said reference voltage V_{ref} is defined in accordance with the expression: V_{anode}=2,5*V_{ref} according to the datasheet of the TL431 regulator (15), V_{anode} describing voltage drop from its anode.

Further, the input stage of the switched-mode power supply (1) converter according to the present invention comprises a low voltage blocker (5), which blocks powering of said band gap reference/comparator (6) in case a voltage level lower than a reference value is measured. The low voltage blocker (5) according to the present invention can be realized by a transient voltage suppressor (TVS) diode as explained below.

TVS diodes contain a P/N junction similar to a Zener diode but with a larger cross section and as such these are used as clamping devices limiting voltage spikes by the low impedance avalanche breakdown of the P/N junction. In a transient event when bus potential (V₀) exceeds the TVS breakdown voltage (V_{BR}), the device becomes low-impedance conducting high current-to-ground. In other words, when said TVS diode becomes low-impedance in response to the bus potential (V₀) greater than the TVS breakdown voltage (V_{BR}), said band gap reference/comparator (6) is powered and said shunt regulator will accordingly provide that said SMPS controller (8) becomes inactive, therefore preventing any damage thereto due to overvoltage.

The low voltage blocker (5) according to the present invention can also be realized by a voltage dropping unit which may include a Zener diode, a transient voltage suppressor (TVS) diode, or a resistor.

In a nutshell, the present invention proposes a switched-mode power supply (1) coupled to an AC voltage source (3) and comprising a transformer having a primary side winding (9) and a secondary side winding (10), said switched-mode power supply (1) further comprising a rectifier (2), an input capacitor (4) and an SMPS controller (8).

It further comprises in the primary side of said transformer and in parallel to said input capacitor (4), a low voltage blocker (5) blocking power transfer to a band gap reference comparator (6) in series therewith in response to a bus potential (V₀) being lower than a predefined voltage value and powering said band gap reference comparator (6) in response to a bus potential (V₀) being greater than said predefined voltage value such that said band gap reference comparator (6) inactivates said SMPS controller (8).

Said low voltage blocker (5) is a transient voltage suppressor (TVS) diode having a breakdown voltage (V_{BR}), said transient voltage suppressor (TVS) diode energizing said band gap reference comparator (6) in response to said bus potential (V₀) being greater than the TVS breakdown voltage (V_{BR}). Said band gap reference comparator (6) is a shunt regulator with voltage setting bias resistors (R₁₃ and R₁₄). A reference pin of said shunt regulator is connected to a centre point between said resistors R₁₃ and R₁₄. Said shunt regulator comprise a TL431 regulator (15). Said TL431 regulator's (15) cathode is connected to said SMPS controller (8).

## Claims

1. A switched-mode power supply (SMPS) (1) coupled to an AC voltage source (3) and comprising:
- a transformer having a primary side winding (9) and a secondary side winding (10),
- a rectifier (2), an input capacitor (4) and an SMPS controller (8),
- in the primary side of said transformer and in parallel to said input capacitor (4), a low voltage blocker (5) blocking power transfer to a band gap reference comparator (6) in series therewith, in response to a bus potential (V0) being lower than a predefined voltage value, and powering said band gap reference comparator (6) in response to a bus potential (V0) being greater than said predefined voltage so as to inactivate said SMPS controller (8),
**characterized in that** said band gap reference comparator (6) is a shunt regulator with voltage setting bias resistors (R13 and R14).

2. A switched-mode power supply (1) according to Claim 1, wherein said low voltage blocker (5) is a transient voltage suppressor (TVS) diode having a breakdown voltage (VBR), said transient voltage suppressor (TVS) diode energizing said band gap reference comparator (6) in response to said bus potential (V0) being greater than the TVS breakdown voltage (VBR).

3. A switched-mode power supply (1) according to Claim 1 or 2, wherein a reference pin of said shunt regulator is connected to a centre point between said resistors R13 and R14.

4. A switched-mode power supply (1) according to Claim 3, wherein said shunt regulator comprises a TL431 regulator (15).

5. A switched-mode power supply (1) according to Claim 4, wherein said TL431 regulator's (15) cathode is connected to said SMPS controller (8).

## Patentansprüche

1. Schaltnetzgerät (SMPS) (1), das an eine Wechselspannungsquelle (3) gekoppelt ist und Folgendes umfasst:
- einen Transformator mit einer Primärseitenwicklung (9) und einer Sekundärseitenwicklung (10),
- einen Gleichrichter (2), einen Eingangskondensator (4) und eine SMPS-Steuereinrichtung (8),
- auf der Primärseite des Transformators und parallel zum Eingangskondensator (4), eine Niederspannungssperre (5), die eine Leistungsübertragung an einen damit in Reihe geschalteten Bandabstandsreferenzkomparator (6) sperrt, in Reaktion darauf, dass ein Buspotential (V0) niedriger als ein vorgegebener Spannungswert ist, und den Bandabstandsreferenzkomparator (6) mit Leistung versorgt, in Reaktion darauf, dass ein Buspotential (V0) größer als die vorgegebene Spannung ist, um die SMPS-Steuereinrichtung (8) zu deaktivieren,
**dadurch gekennzeichnet, dass** der Bandabstandsreferenzkomparator (6) ein Shunt-Regler mit Spannungseinstellungs-Vorspannungswiderständen (R13 und R14) ist.

2. Schaltnetzgerät (1) nach Anspruch 1, wobei die Niederspannungssperre (5) eine Ausgleichspannung unterdrückende (TVS) Diode mit einer Durchbruchspannung (VBR) ist, wobei die Ausgleichspannung unterdrückende (TVS) Diode den Bandabstandsreferenzkomparator (6) in Reaktion darauf mit Leistung versorgt, dass das Buspotential (V0) größer als die TVS-Durchbruchspannung (VBR) ist.

3. Schaltnetzgerät (1) nach Anspruch 1 oder 2, wobei ein Referenzstift des Shunt-Reglers mit einem Mittelpunkt zwischen den Widerständen R13 und R14 verbunden ist.

4. Schaltnetzgerät (1) nach Anspruch 3, wobei der Shunt-Regler einen TL431-Regler (15) umfasst.

5. Schaltnetzgerät (1) nach Anspruch 4, wobei die Kathode des TL431-Reglers (15) mit der SMPS-Steuereinrichtung (8) verbunden ist.

## Revendications

1. Une alimentation à découpage (SMPS) (1) qui est reliée à une source de tension alternative (3) et comprenant:
- un transformateur ayant un enroulement primaire (9) et un enroulement secondaire (10),
- un redresseur (2), un condensateur d'entrée (4) et un contrôleur SMPS (8),
- dans le côté primaire dudit transformateur et en parallèle audit condensateur d'entrée (4), un bloqueur de basse tension (5) qui bloque le transfert d'énergie à un comparateur de référence d'intervalle de bande (6) en série avec celui-ci, en réponse à une énergie potentielle de bus (V0) étant inférieure à une valeur de tension prédéfinie et alimentant ledit comparateur de référence d'intervalle de bande (6) en réponse à une énergie potentielle de bus (V0) étant supérieure à ladite tension prédéterminée de manière à inactiver ledit contrôleur SMPS (8),
**caractérisé en ce que** ledit comparateur de référence d'intervalle de bande (6) est un régulateur shunt avec des résistances de polarisation de réglage de tension (R13 et R14).

2. Une alimentation à découpage (1) selon la Revendication 1, où ledit bloqueur de basse tension (5) est une diode de suppresseur de tension transitoire (TVS) présentant une tension de claquage (VBR), ladite diode de suppresseur de tension transitoire (TVS) alimentant ledit comparateur de référence d'intervalle de bande (6) en réponse à ladite énergie potentielle de bus (V0) étant supérieure à la tension de claquage de TVS (VBR).

3. Une alimentation à découpage (1) selon la Revendication 1 ou 2, où une broche de référence dudit régulateur shunt est reliée à un point central entre lesdites résistances R13 et R14.

4. Une alimentation à découpage (1) selon la Revendication 3, où ledit régulateur shunt comprend un régulateur TL431 (15).

5. Une alimentation à découpage (1) selon la Revendication 4, où ladite cathode dudit régulateur TL431 (15) est reliée audit contrôleur SMPS (8).
